# EUROPEAN PATENT SPECIFICATION

(11) **EP 0 887 249 B1**
(45) Date of publication and mention of the grant of the patent: **26.11.2003**
(21) Application number: 98202118.0
(22) Date of filing: 26.06.1998
(51) Int. Cl.: B62H 5/00, B62H 5/20, G08B 13/24

(54) **Identification device for a cycle or the like**
Indentifizierungsvorrichtung für Fahrrad oder dergleichen
Dispositif d'identification pour bicyclette ou similaire

(30) Priority: 27.06.1997 NL 1006418
(43) Date of publication of application: 30.12.1998
(73) Proprietor: Dikken, A., 8243 EA Lelystad (NL); Kerssen, Abraham Jan, 8212 AH Lelystad (NL)
(72) Inventor: Dikken, Arnold, 8243 EA Lelystad (NL); Kerssen, Abraham Jan, 8211 AJ Lelystad (NL)
(74) Representative: Ferguson, Alexander

(56) References cited:
- DE-A- 19 646 994
- FR-A- 2 656 449
- NL-A- 9 101 758
- US-A- 3 721 956
- US-A- 5 270 681

## Description

The invention relates to an identification device for a bicycle and the like, comprising a housing with in it a tag or transponder with a transmission and receiver portion.

Such an identification device is known from the Dutch patent application 91-01758. This document shows an identification device which can be arranged around a frame tube of a bicycle frame and which consists of two parts. After arranging around the tube the two parts form a hollow housing running around the tube, in which housing the electronics of the transponder are situated. The hollow space is filled with a self-hardening moulding material, so that after hardening of the moulding material the housing can only be removed from the bicycle in a destructive manner, because of which the transponder will be damaged and cannot be identified by a transmission/receiver device suitable for that purpose. A check and passage system of for instance an unguarded bicycle shed will then refuse passage to the bicycle. Passage for that matter is only granted to the bicycle with identification device when the owner also identifies him/herself. Such a security system is known from the Dutch patent application 91-00212.

A disadvantage of the known identification device is that this device cannot be arranged in a simple way on the bicycle by the owner him/herself. Another disadvantage is that the known identification device protrudes because it is arranged around a tube of the bicycle frame, because of which the chance of damages as a result of external factors such as vandalism and damage because of accidents is not negligible. The transponder can get damaged in that way too.

It is an objective of the invention to provide an identification device for a bicycle and the like which is simple and can be arranged in a simple manner and which can be used on a bicycle and the like with little chance of damage.

According to the invention at least one of these objectives is achieved with an identification device according to claim 1.

Because of this design the identification device according to the invention is at least partly surrounded by the bicycle after arranging, because of which the chance of damage is small. In this way the identification device is less easily accessible as well, which makes it more difficult to remove the identification device from the bicycle in a destructive manner.

The identification device for identifying an object in which an opening or hole is present can in this way also be used for identifying other objects than bicycles and vehicles. Consumer goods that need to be protected from theft can be thought of here.

The identification device for identifying a vehicle, the housing being designed such that the housing can be undetachably arranged in an opening or hole, which is present in a construction part of the vehicle, e.g. a car, can for instance be arranged in a bottom plate, and can be used for an unguarded garage. The vehicle can also be a trolley, in which the identification device can be arranged in an opening of the frame or the wire netting of the accommodation space, for instance to warn when the trolley is taken to far away from the shop.

According to an advantageous embodiment the housing can be arranged in the free space between two frame tubes of the bicycle and the like, so that the frame tubes can offer a firm support of the housing.

Preferably the housing is designed such that the housing can be arranged in the free space between the two frame tubes of a rear fork of the bicycle and the like. The free space between the frame tubes of the rear fork offers a suitable place to accommodate the identification device relatively inconspicuously.

According to an advantageous embodiment the housing can be arranged in the free space between the two frame tubes of the horizontal rear fork of the bicycle and the like, directly behind the crankshaft house. By arranging the identification device on this place it is situated near the ground level, that is to say the ground in which the transmission receiver device is situated.

Preferably the transponder is accommodated in the housing such that the transmission and receiver portion substantially protrudes under the frame tubes after arrangement. In this way the identification device can be detected well by a detection device which is arranged in or on road surface. Thus the signal transmitted to the identification device and which is subsequently transmitted back by the transponder is interfered as little as possible by the metal frame tubes.

Preferably the transponder is accommodated in the housing such that it will be irretrievably damaged when the housing is removed from the bicycle and the like in a destructive manner. Because of this the transponder cannot be used anymore for another (stolen) bicycle.

According to an advantageous embodiment, the housing comprises two parts, which can be undetachably attached to one another. An owner of a bicycle can for that reason easily arrange the housing on his/her bicycle him/herself.

Preferably the housing is made of plastic such as polycarbonate, which has a high hardness and breaking-strength.

According to a preferred embodiment a recess is present in the one part in which the transponder can be arranged, and a recess is present in the other part in which the one part, provided with the transponder, can at least partly be accommodated. As a result of this construction the transponder can be accommodated in the housing in a reliable way.

According to an embodiment both parts can be fastened to one another by means of a glued connection. In this way the identification device can be arranged on the bicycle in a simple way and without having to apply force. Disadvantageous is that the gluing requires a certain skilfullness.

Preferably both parts can be fastened to one another by means of a snap connection. The bicycle owner then does not have to use additional means to secure the identification device to his/her bicycle.

In this case the one part is preferably provided with a number of hooking means, which can be hooked in groove means in the recess of the other part. In this way the identification device can be snapped around the frame tubes at various lengths, which tubes can have a different thickness with different bicycles.

Preferably the transponder is irremovably accommodated in the housing after it has been placed in the one part and the one part has been fastened in the other part. The transponder then cannot be reached from outside and is only accessible by destructing the housing.

Preferably the housing is designed such that it can be arranged in various free spaces of the bicycle and the like, if necessary with the help of filling pieces or sealing rings. In this way the identification device can also be arranged on different types of bicycles.

Preferably the housing is designed as described in claim 11.

In the following the invention will be elucidated on the basis of the accompanying drawings.
Figure 1 shows an exemplary embodiment of the geometry of the identification device according to the invention.
Figure 2 shows an identification device according to figure 1, arranged in the free space of the horizontal rear fork of a bicycle, behind the crankshaft house.
Figure 3 shows a view from above of figure 2.
Figure 4 shows the identification device of figure 1, arranged in a hole of an arbitrary object.
Figure 5 shows another exemplary embodiment of the identification device according to the invention.

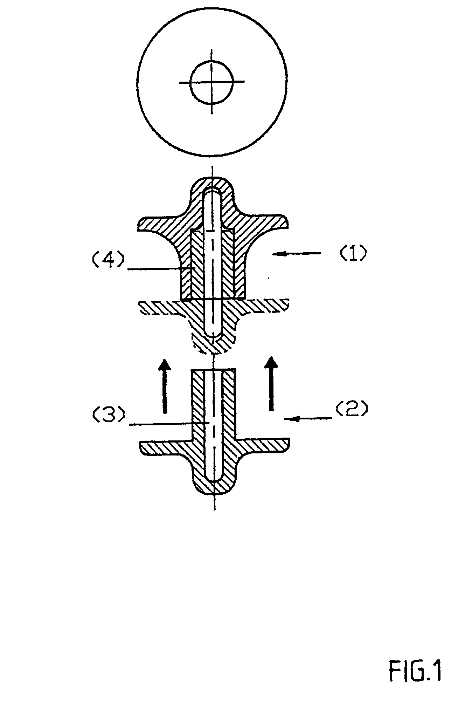

In figure 1 a possible geometry of the fastening construction annex housing of the transponder is schematically shown. The housing here is built from two plastic parts 1 and 2, which both have a round recess. The recess 3 of the plastic part 1 can be provided with a transponder and in the recess 4 of plastic part 2 plastic part 1 can be slid.

The recesses 3 and 4 of the plastic parts 1 and 2 comply with such dimensions that various types of transponders can be placed in this space, as the housing should also be used as secondary housing for other transponder uses.

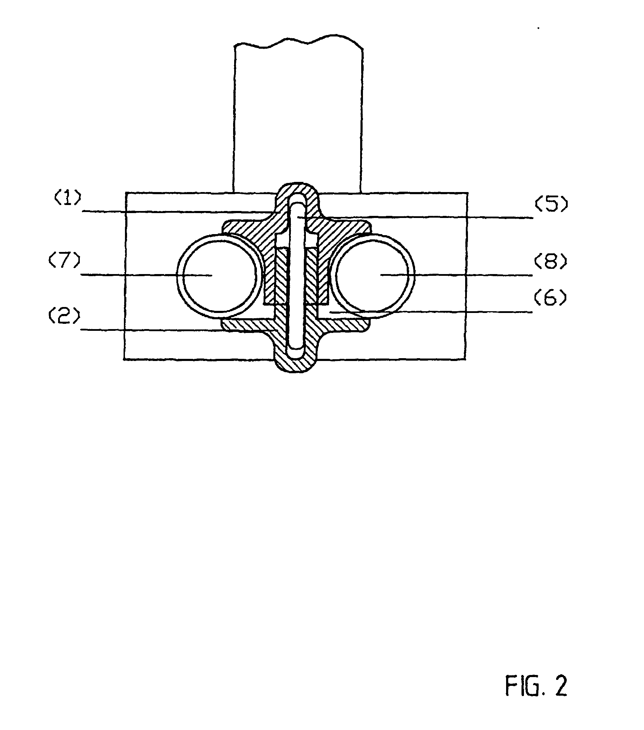

In figure 2 it is schematically shown how the plastic parts 1 and 2 slid into one another are situated between the frame tubes of a bicycle. By providing the transponder 5 with a soft enveloping of a variable thickness, various types of transponders can be arranged within the standard-sized recess 3 in the plastic parts 1 and 2.

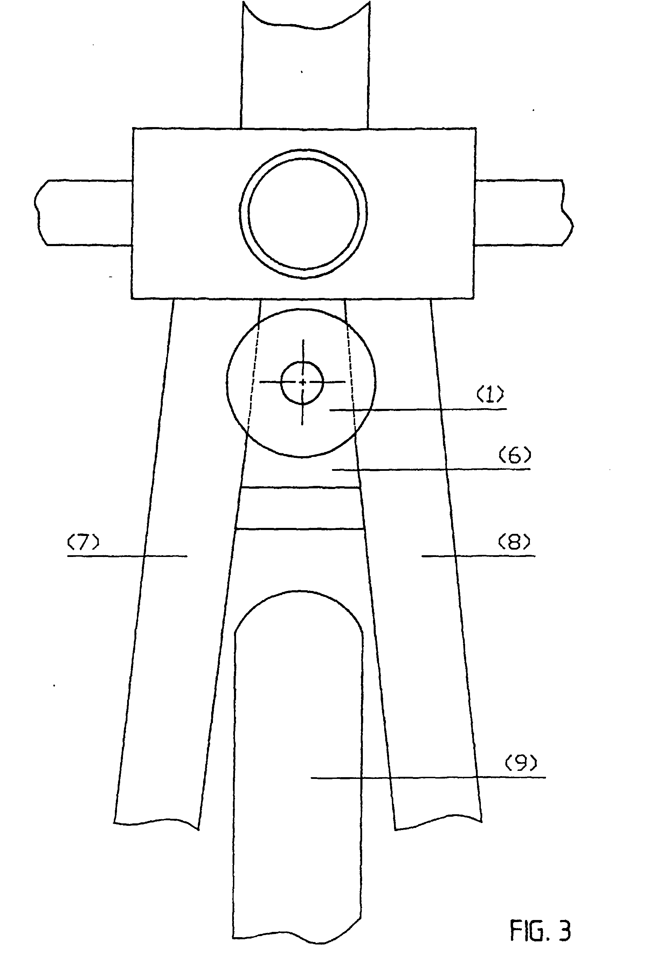

In figure 3 in a view from above, that is to say a view from a position on a longitudinal axis of the frame tube, a possible positioning within the free space 6 between two frame tubes 7 and 8 is shown. By the words "free space 6" the portion is meant where there is room for a fastening construction, but the rotation of the rear wheel 9 is not hindered by the arrangement of the construction.

The fastening location of the system in said free space 6 is defined by the fact that here on the frame of the bicycle there is possibility for fastening which is close to the ground level. By the ground level the surface on which the bicycle rides is meant, which is of importance for the distance of detection of the transmission and receiver device. As a result of the presence of metal frame tubes 7 and 8 on both sides of the transponder 5, the fastening location also offers more protection against damage through external factors such as vandalism and damages through accidents.

Starting point with the design of the fastening construction annex secondary housing is the principle that the owner of the bicycle should be able to arrange the system on the bicycle in a simple way him/herself. To that end first plastic part 1, in which beforehand the transponder 5 has been arranged, is pushed from above through the free space 6 after which from below plastic part 2 is pushed over the plastic part 1 sticking through. Both plastic parts are fastened to each other by means of a so-called snap connection or by means of a glued connection.

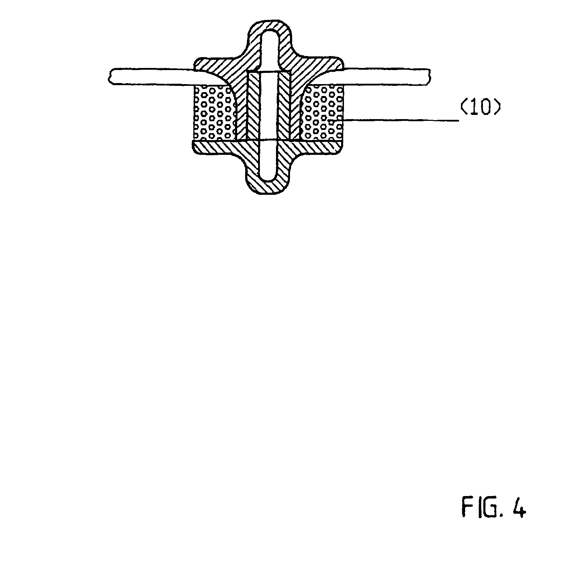

Figure 4 shows another form of use, in which the identification device is arranged on another object which has to be identified. By means of boring a hole of the desired diameter in the product to be identified the fastening construction can be fastened on many other products with the help of so-called fitting blocks 10.

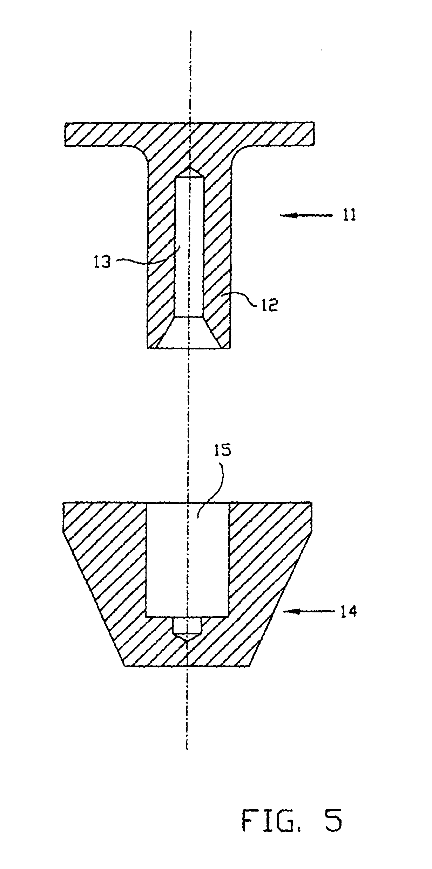

Figure 5 shows another embodiment of the housing of the identification device, consisting of an upper part 11 with a projection 12 in which transponder 5 of figure 2 can for the greater part be accommodated in bore hole 13, and a lower part 14 in which the projection 12 of the upper part 11 can for the greater part be accommodated in recess 15.

By inserting the upper part 11 through an accommodation space of a bicycle or a hole in an object and arranging the lower part 14 undetachably, the transponder in the bore hole 13 will largely protrude below the accommodation space or the hole, and be very well detectable. Both parts 11, 14 can be fastened to each other by gluing. It is also possible to provide the projection 12 and the recess 15 with hooking means (which are not shown), which when they are slid into each other hook behind each other to undetachably fasten both parts to each other.

## Claims

1. Identification device for identifying an object, a vehicle or a bicycle and the like, comprising a housing with in it a tag or transponder with a transmission and receiver portion, **characterized in that** the housing is designed such that the housing can be undetachably arranged in an opening (6) of the bicycle and the like, or in an opening or hole present in the construction part of the vehicle or in the object.

2. Identification device according to claim 1, in which the housing can be arranged in the opening (6) between two frame tubes (7,8) of the bicycle and the like, preferably in the opening between the two frame tubes of a rear fork of the bicycle and the like.

3. Identification device according to claim 2, in which the housing can be arranged in the opening (6) between the two frame tubes (7,8) of the horizontal rear fork of the bicycle and the like, directly behind the crankshaft house, the transponder preferably being accommodated in the housing such that the transmission and receiver portion substantially protrudes under the frame tubes after arrangement.

4. Identification device according to any one of the preceding claims, in which the transponder is accommodated in the housing such that it will be irretrievably damaged when the housing is removed from the bicycle and the like in a destructive manner.

5. Identification device according to any one of the preceding claims, in which the housing comprises two parts (1,2; 11,14), which can be undetachably attached to one another, the housing preferably being made of plastic such as polycarbonate.

6. Identification device according to claim 5, a recess (3,13) being present in the one part (1,11) in which the transponder (5) can be arranged, and a recess (4,15) being present in the other part (2,14) in which the one part, provided with the transponder, can at least partly be accommodated.

7. Identification device according to claim 6, in which both parts (1,2; 11,14) can be fastened to one another by means of a glued connection.

8. Identification device according to claim 6, in which both parts (1,2; 11,14) can be fastened to one another by means of a snap connection, preferably the one part being provided with a number of hooking means, which can be hooked in groove means in the recess of the other part.

9. Identification device according to claim 6, 7 or 8, in which the transponder is irremovably accommodated in the housing after it has been placed in the one part and the one part has been fastened in the other part.

10. Identification device according to any one of the claims 5-9, in which the housing is designed such that it can be arranged in various free spaces of the bicycle and the like, if necessary with the help of filling pieces (10) or sealing rings.

11. Identification device according to any one of the preceding claims 5-10, both parts having an elongated projection (12) having a cross-section adapted to fit in the hole or opening and a thickened end having a cross-section adapted to prevent the entire part from passing the hole or opening, the elongated projections (12) of both parts being provided with means for undetachably attaching the parts to one another with their elongated projections arranged in the hole or opening and one thickened end at each side of the hole or opening.

12. Check and passage system for a vehicle, preferably a bicycle, comprising an identification device according to any one of the preceding claims fastened to the vehicle close to the ground level, and a detection device situated in or on the road surface.

13. Use of an identification device according to any one of the preceding claims fastened to a vehicle, preferably a bicycle, close to the ground level, in a check and passage system futher comprising a detection device situated in or on the road surface.

## Patentansprüche

1. Identifizierungsvorrichtung zum Identifizieren eines Objektes, eines Fahrzeugs oder eines Fahrrads und dergleichen, umfassend ein Gehäuse mit darin einem Abzeichen oder einem Transponder mit einem Sende- und Empfangsteil, **dadurch gekennzeichnet, daß** das Gehäuse derartig gestaltet ist, daß das Gehäuse unabnehmbar in einer Öffnung (6) des Fahrrads und dergleichen oder in einer in dem Bauteil des Fahrzeugs oder des Objektes vorhandenen Öffnung oder Loch angeordnet werden kann.

2. Identifizierungsvorrichtung nach Anspruch 1, wobei das Gehäuse in der Öffnung (6) zwischen zwei Rahmenrohren (7,8) des Fahrrads und dergleichen, vorzugsweise in der Öffnung zwischen den zwei Rahmenrohren einer Hinterradgabel des Fahrrads und dergleichen angeordnet werden kann.

3. Identifizierungsvorrichtung nach Anspruch 2, wobei das Gehäuse in der Öffnung (6) zwischen zwei Rahmenrohren (7,8) der horizontalen Hinterradgabel des Fahrrads und dergleichen angeordnet werden kann, direkt hinter dem Tretkurbelachsegehäuse, wobei der Transponder vorzugsweise derartig in dem Gehäuse aufgenommen ist, daß das Sende- und Empfangsteil nach Anordnung hauptsächlich unter den Rahmrohren herausragt.

4. Identifizierungsvorrichtung nach einem der vorhergehenden Ansprüche, wobei der Transponder derartig in dem Gehäuse aufgenommen ist, daß es irreparabel beschädigt wird, wenn das Gehäuse auf eine destruktive Weise von dem Fahrrad und dergleichen entfernt wird.

5. Identifizierungsvorrichtung nach einem der vorhergehenden Ansprüche, wobei das Gehäuse zwei Teile (1,2; 11,14), die unabnahmbar aneinander befestigt werden können, umfaßt, wobei das Gehäuse vorzugsweise aus Kunststoff, wie Polycarbonat, hergestellt ist.

6. Identifizierungsvorrichtung nach Anspruch 5, wobei in dem einen Teil (1, 11) eine Aussparung (3,13) vorhanden ist, worin der Transponder (5) angeordnet werden kann, und wobei in dem anderen Teil (2,14) eine Aussparung (4,15) vorhanden ist, worin das eine Teil, mit dem Transponder versehen, zumindest teilweise aufgenommen werden kann.

7. Identifizierungsvorrichtung nach Anspruch 6, wobei beide Teile (1,2; 11,14) durch eine Leimverbindung aneinander befestigt werden können.

8. Identifizierungsvorrichtung nach Anspruch 6, wobei beide Teile (1,2; 11,14) durch eine Schnappverbindung aneinander befestigt werden können, wobei vorzugsweise das eine Teil mit einer Anzahl von Hakenmitteln versehen is, die an Rillenmittel in der Aussparung des anderen Teils gehakt werden können.

9. Identifizierungsvorrichtung nach Anspruch 6, 7 oder 8, wobei der Transponder unentfernbar in dem Gehäuse aufgenommen ist, nachdem er in dem einen Teil angeordnet ist und das eine Teil in dem anderen Teil befestigt ist.

10. Identifizierungsvorrichtung nach einem der Ansprüche 5 - 9, wobei das Gehäuse derartig gestaltet ist, daß dieses in verschiedenen Öffnungen vom Fahrrad und dergleichen angeordnet werden kann, wenn nötig mit Hilfe von Füllstücken (10) oder Abdichtungsringen.

11. Identifizierungsvorrichtung nach einem der Ansprüche 5-10, wobei beide Teile einen verlängerten Vorsprung (12) mit einem Querschnitt umfassen, angepasst um in den Loch oder die Öffnung zu passen und ein verdicktes Ende mit einem Querschnitt angepasst um zu verhüten, daß das ganze Teil an dem Loch oder der Öffnung vorbeigeht, wobei die verlängerten Vorsprünge (12) von beiden Teilen mit Mitteln versehen sind, um die Teile unentfernbar aneinander zu befestigen mit ihren verlängerten Vorsprüngen in dem Loch oder in der Öffnung angeordnet und ein verdicktes Ende an jeder Seite des Loches oder der Öffnung.

12. Kontrolle- und Durchgangssystem für ein Fahrzeug, vorzugsweise ein Fahrrad, umfassend eine Identifikationsvorrichtung nach einem der vorhergehenden Ansprüche, nahe der Bodenfläche an dem Fahrzeug befestigt, und eine in oder auf der Straßenfläche gelegene Detektionsvorrichtung.

13. Benutzung einer Identifikationsvorrichtung nach einem der vorhergehenden Ansprüche, nahe der Bodenfläche an einem Fahrzeug, vorzugsweise einem Fahrrad befestigt, in einem Kontrolle- und Durchgangssystem, weiter umfassend eine in oder auf der Straßenfläche gelegene Detektionsvorrichtung.

## Revendications

1. Dispositif d'identification pour identifier un objet, un véhicule ou une bicyclette et analogue, comprenant un logement avec dans celui-ci une étiquette ou un transpondeur ayant une portion de transmission et de réception, **caractérisé en ce que** le logement est conçu de manière à ce que le logement puisse être disposé de manière non détachable dans une ouverture (6) de la bicyclette ou analogue, ou dans une ouverture ou un orifice présent dans la partie de construction du véhicule ou dans l'objet.

2. Dispositif d'identification selon la revendication 1, dans lequel le logement peut être disposé dans l'ouverture (6) située entre deux tubes d'armature (7, 8) de la bicyclette et analogue, de préférence dans l'ouverture située entre deux tubes de l'armature d'une fourche arrière de la bicyclette et analogue.

3. Dispositif d'identification selon la revendication 2, dans lequel le logement peut être disposé dans l'ouverture (6) située entre deux tubes d'armature (7, 8) de la fourche arrière horizontale de la bicyclette et analogue, directement derrière le logement du vilebrequin, le transpondeur étant de préférence logé dans le logement de manière à ce que la portion de transmission et de réception fasse sensiblement saillie sous les tubes d'armature après sa mise en place.

4. Dispositif d'identification selon l'une quelconque des revendications précédentes, dans lequel le transpondeur est disposé dans le logement de manière à être irréversiblement endommagé lorsque le logement est enlevé de la bicyclette et analogue de manière destructrice.

5. Dispositif d'identification selon l'une quelconque des revendications précédentes, dans lequel le logement comprend deux parties (1, 2, 11, 14), qui peuvent être attachées de manière non détachable l'une à l'autre, le logement étant de préférence fait de plastique tel que le polycarbonate.

6. Dispositif d'identification selon la revendication 5, un renfoncement (3, 13) étant présent dans une partie (1, 11) dans laquelle le transpondeur (5) peut être disposé, et un renfoncement (4, 15) étant présent dans l'autre partie (2, 14) dans lequel la partie munie du transpondeur peut être au moins partiellement logée.

7. Dispositif d'identification selon la revendication 6, dans lequel les deux parties (1, 2 ; 11, 14) peuvent être fixées l'une à l'autre au moyen d'un lien collé.

8. Dispositif d'identification selon la revendication 6, dans lequel les deux parties (1, 2 ; 11, 14) peuvent être fixées l'une à l'autre au moyen d'un lien à pression, de préférence une partie étant munie d'un certain nombre de moyens d'accrochage qui peuvent être accrochés dans des orifices dans le renfoncement de l'autre partie.

9. Dispositif d'identification selon la revendication 6, 7 ou 8, dans lequel le transpondeur est logé de manière indélogeable dans le logement après avoir été placé dans une partie et que ladite partie a été fixées à l'autre partie.

10. Dispositif d'identification selon l'une quelconque des revendications 5 à 9, dans lequel le logement est conçu de manière à pouvoir être disposé dans divers espaces libres de la bicyclette et analogue, le cas échéant à l'aide de pièces de remplissage (10) ou d'anneaux de scellage.

11. Dispositif d'identification selon l'une quelconque des revendications 5 à 10, les deux parties ayant une projection allongée (12) ayant une coupe transversale adaptée pour entrer dans l'orifice ou dans l'ouverture et une extrémité plus épaisse ayant une coupe transversale adaptée pour empêcher la partie entière de passer par l'orifice ou par l'ouverture, les projections allongées (12) des deux parties étant munies de moyens pour attacher les parties l'une à l'autre de manière non détachable, leurs projections allongées étant disposées dans l'orifice ou dans l'ouverture et une extrémité plus épaisse au niveau de chaque côté de l'orifice ou de l'ouverture.

12. Système de vérification et de passage pour un véhicule, de préférence une bicyclette, comprenant un dispositif d'identification selon l'une quelconque des revendications précédentes attaché au véhicule à proximité du sol, et un dispositif de détection situé dans ou sur la surface de la route.

13. Utilisation d'un dispositif d'identification selon l'une quelconque des revendications précédentes attaché à un véhicule, de préférence une bicyclette, à proximité du niveau du sol, dans un système de vérification et de passage comprenant en outre un dispositif de détection situé dans ou sur la surface de la route.
